Europäisches Patentamt

European Patent Office

Office européen des brevets

(19)

(11) Veröffentlichungsnummer : **0 031 160**
**B1**

(12) **EUROPÄISCHE PATENTSCHRIFT**

(45) Veröffentlichungstag der Patentschrift :
07.11.84

(21) Anmeldenummer : 80108070.6

(22) Anmeldetag : 19.12.80

(51) Int. Cl.³ : **C 21 C   5/56**, C 21 C   5/52,
C 21 C   5/04, F 27 B   3/02,
C 21 B 13/00

(54) **Metallurgisches Schmelz- und Frischaggregat.**

(30) Priorität : 21.12.79 DE 2951825
21.12.79 DE 2951826

(43) Veröffentlichungstag der Anmeldung :
01.07.81 Patentblatt 81/26

(45) Bekanntmachung des Hinweises auf die Patenterteilung : 07.11.84 Patentblatt 84/45

(84) Benannte Vertragsstaaten :
AT BE CH DE FR GB IT LI LU

(56) Entgegenhaltungen :
DE-A- 2 425 947
GB-A- 1 486 539
US-A- 3 859 078

(73) Patentinhaber : IKOSA Industria de Aco Korf Ltda.
Rua da Gloria, 344 Gr. 802
20.241 Rio de Janeiro - RJ (BR)

(72) Erfinder : Wells, William
4610 Carmel Valley Road
Charlotte North Carolina (US)
Erfinder : Weber, Ralph, Dipl.-Ing.
Rua Campo Belo 300
Laranjeiras Rio de Janeiro (BR)

(74) Vertreter : Blumbach Weser Bergen Kramer Zwirner
Hoffmann Patentanwälte
Radeckestrasse 43
D-8000 München 60 (DE)

## Beschreibung

Die Erfindung betrifft ein metallurgisches Schmelzaggregat gemäß dem Oberbegriff des Anspruchs 1.

Bekanntlich bedient man sich zur Stahlherstellung verschiedener Schmelzaggregate. Je nach verfügbarem Einsatzmaterial und teils historisch bedingt wird Stahl im Siemens-Martin-Ofen, im Konverter oder im Lichtbogenofen gewonnen.

Der Siemens-Martin-Ofen ist im europäischen Raum weitgehend durch den Konverter ersetzt worden, der wesentlich wirtschaftlicher arbeitet. Nachteilig am Konverter sind die hohen Investitionskosten. Wenn ein Siemens-Martin-Ofen durch einen Konverter ersetzt werden soll, so müssen die Hallen ebenfalls erneuert werden, da sie nicht die für den Konverter erforderliche Höhe haben. Bisher hat es außerdem Schwierigkeiten bereitet, im Konverter einen größeren Schrottanteil einzuschmelzen. Dieses Problem wird beispielsweise in der DE-A1-2 729 982 angesprochen.

Der Lichtbogenofen ist für den Einsatz von flüssigem Roheisen nicht gut geeignet. Außerdem sind die Energiekosten hoch und es steht nicht immer die elektrische Energie der gewünschten Leistung zur Verfügung.

Aufgabe dieser Erfindung ist es, ein im Hinblick auf Einsatzmaterial und Energiequellen universelles Schmelzaggregat verfügbar zu machen, das sich durch geringe Anlagekosten auszeichnet. Dieses Schmelzaggregat soll Siemens-Martin-Ofen in bereits bestehenden Stahlwerken ersetzen können und für die Verarbeitung von beliebigen Mischungen aus Schrott, Eisenschwamm, festem und flüssigem Roheisen geeignet sein. Ferner soll bei Verwendung eines Vorwärmers für das Einsatzmaterial eines solchen universellen Schmelzaggregates sichergestellt sein, daß beim Chargieren des Einsatzmaterials in das Ofengefäß die in dieses mündenden ersten und zweiten Düsen vor einer mechanischen Beschädigung geschützt sind und damit die Funktionsfähigkeit dieser Düsen erhalten bleibt.

Ausgehend von einem Schmelzaggregat der im Oberbegriff genannten Art, wie es beispielsweise durch die US-A-3 859 078 bekannt geworden ist, wird diese Aufgabe durch die kennzeichnenden Merkmale des Anspruchs 1 gelöst.

Vorteilhafte Ausgestaltungen der Erfindung sind den Unteransprüchen zu entnehmen.

Im Vergleich zum Siemens-Martin-Ofen sind bei dem erfindungsgemäßen Schmelzaggregat die Betriebskosten niedriger, es ist ein schnelleres Chargieren von Schrott möglich, die Produktion pro Zeiteinheit ist vergrößert und die Energiekosten sind verringert. Es ist mit geringen Investitionskosten möglich, den Siemens-Martin-Ofen eines bereits bestehenden Stahlwerkes durch das erfindungsgemäße Schmelzaggregat zu ersetzen.

Im Vergleich zu Lichtbogenöfen ist ein höherer Einsatz an flüssigem Roheisen möglich, der bis zu 90 % der Charge betragen kann, die Energiekosten und Anlagekosten sind geringer und der Kohlenstoffanteil kann bei der Herstellung eines niedrig gekohlten Stahls auf einfache Weise verringert werden. In Kombination mit Lichtbogenelektroden wird das Schmelzaggregat in der Anwendung noch flexibler. Die Stromversorgung braucht nicht auf den Spitzenwert ausgelegt zu werden, sondern kann auf einen mittleren Wert begrenzt werden, weil daneben andere Energiequellen einsetzbar sind.

Im Vergleich zum Konverter ist ein höherer Schrottanteil möglich, die Investitionskosten sind wesentlich verringert und es ist eine bessere Ausnutzung an Energie möglich. Außerdem ist ein kontinuierlicher Prozeß möglich, es können während des Prozesses Analysen entnommen und durch Änderung der Verfahrensbedingungen und Zugabe von feinkörnigen Feststoffen durch die Düsen das gewünschte Endprodukt erhalten werden. Legierte Stähle der gewünschten Zusammensetzung sind einfacher als im Konverter oder im Lichtbogenofen herstellbar.

Beim erfindungsgemäßen Schmelz- und Frischaggregat eignen sich als Einsatzmaterialien festes Roheisen, flüssiges Roheisen, Schrott und Eisenschwamm in beliebigen Mischungen. Als Energiequellen sind Öl oder Kohle oder Gase oder elektrische Energie einsetzbar. Wird das Schmelzaggregat ohne Elektroden ausgebildet, dann ist die benötigte Hallenhöhe gering. Es ist leicht zu wechseln, zu reparieren und zu chargieren. Wegen der geringen Anlagekosten sind bestehende Stahlwerke mit anderen Schmelzaggregaten leicht umrüstbar und können an geänderte Verhältnisse im Einsatzmaterial oder in der Energieversorgung angepaßt werden. Das Schmelz- und Frischaggregat kann auch in einfacher Weise mit einem Vorwärmer für das Einsatzmaterial ausgestattet werden. Die durch die Form des Ofengefäßes bedingte Gefahr einer Beschädigung der in das Ofengefäß mündenden Düsen durch die beim Chargieren herabfallenden Teile des Einsatzmaterials, insbesondere größere Schrotteile, kann durch eine mehrteilige Ausbildung des den Boden des Vorwärmers bildenden Rostes und eine Öffnung des Rostes von der Mitte aus beseitigt werden. Hierdurch wird ein kontrolliertes Chargieren ermöglicht und sichergestellt, daß die Schrotteile beim Öffnen des Rostes im wesentlichen im mittleren Bereich herabfallen und die Düsen nicht beschädigen können.

Die Erfindung wird durch zwei Ausführungsbeispiele anhand von sechs Figuren näher erläutert. Es zeigen in schematischer Darstellung

Figur 1   einen Längsschnitt und

Figur 2   einen Querschnitt einer ersten Ausführungsform eines erfindungsgemäßen Schmelz- und Frischaggregates ;

Figur 3   einen Längsschnitt einer zweiten Ausführungsform ;

Figur 4   teilweise im gebrochenen Zustand die Schnittansicht IV-IV von Fig. 3 ;

Figur 5 den Rost in der Schnittansicht V-V von Fig. 3 ;

Figur 6 im Schema eine Anordnung von vier gegeneinander verschiebbaren Rostteilen.

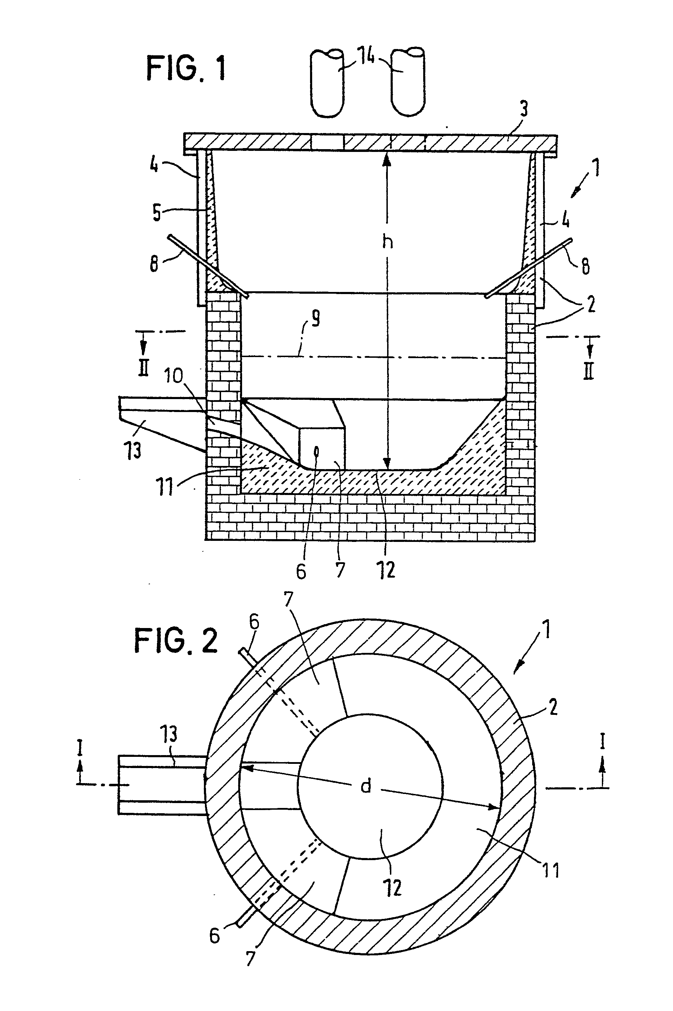

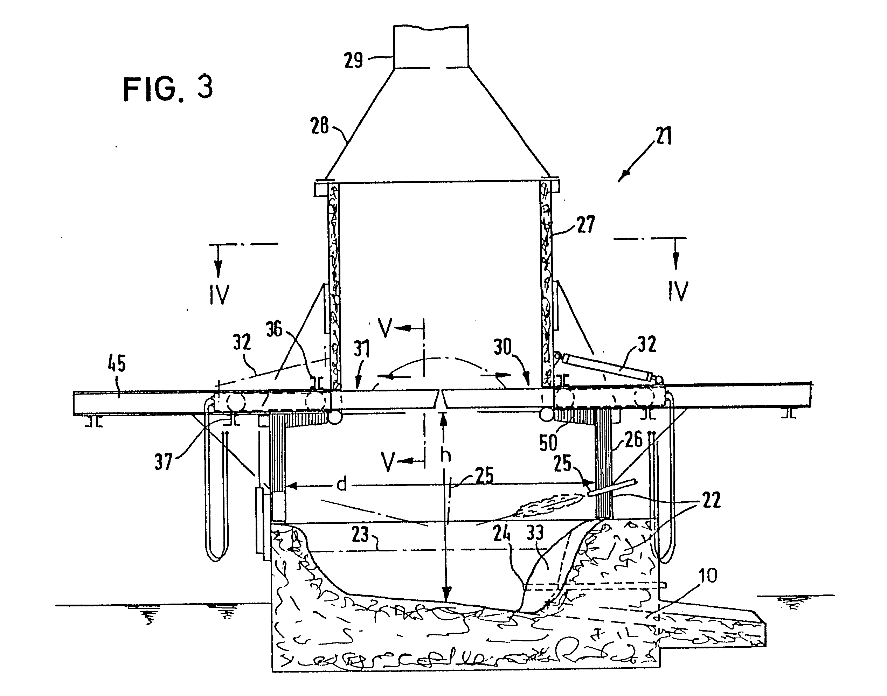

Das metallurgische Schmelzaggregat 1 entsprechend den Fig. 1 und 2 zur Gewinnung von Stahl aus flüssigem Roheisen und/oder Schrott und/oder Eisenschwamm ist als Rundofen, d. h. als ein Ofengefäß 2 mit etwa kreisförmigen Querschnitt des Innenraums und einem ausschwenkbaren Deckel 3 ausgebildet. Das Verhältnis der Innenabmessungen Durchmesser d zu Höhe h des Ofengefäßes liegt zwischen 0,8 und 2,5, vorzugsweise zwischen 1,0 und 2,0. Das Ofengefäß ist im unteren Bereich gemauert, im oberen Bereich ist die Seitenwand in bekannter Weise durch Wasserkühlkästen 4 gebildet, die zum Ofeninneren hin durch eine feuerfeste Masse 5 geschützt sind. Gegenüber den üblichen Lichtbogenöfen mit Wasserkühlkästen, wie sie beispielsweise in der DE-B-2 659 827 beschrieben sind, ist im vorliegenden Fall die Ausmauerung etwas höher gezogen, da Düsen vorgesehen sind, durch die sauerstoffhaltige Gase und Brennstoffe eingeblasen werden. Es sind zwei Arten von Düsen vorhanden. Erste Düsen 6 zum Einblasen von sauerstoffhaltigen Gasen sind jeweils in einer Bank 7 aus Feuerfestmaterial am Boden des Ofengefäßes 2 mit horizontaler oder schwach nach unten geneigter Achse angeordnet. Der Neigungswinkel der Achse gegenüber der Horizontalen beträgt vorzugsweise höchstens 20 Grad. Sie münden unterhalb des Schmelzspiegels 9 in das Ofengefäß und zwar in einer Höhe von etwa 10 bis 20 cm oberhalb der durch die feuerfeste Auskleidung 11 gebildeten Ofensohle 12. Diese Düsen bestehen zum Beispiel in bekannter Weise aus wenigstens zwei konzentrischen Rohren mit einem zentralen Kanal für Sauerstoff oder sauerstoffhaltiges Gas und den zentralen Kanal konzentrisch umgebenden Ringkanälen für ein Schutzfluid, wie Propan, Öl etc. Die betreffenden Kanäle sind durch Leitungen mit entsprechenden Quellen für Sauerstoff oder das Schutzfluid verbunden (nicht dargestellt). Es ist zu beiden Seiten des Abstichloches 10 jeweils eine Düsenbank 7 vorgesehen, in der die Düsen 6 etwa radial nach innen geführt sind. Hierdurch wird nicht nur eine gute Durchmischung der Schmelze gewährleistet, sondern vor dem Abstichloch 10 auch eine hohe Temperatur der Schmelze erzeugt, so daß es nicht zu einem Zuwachsen des Abstichloches vom Ofeninneren aus kommen kann.

Zweite als Brenner ausgebildete Düsen 8 sind oberhalb des durch eine strichpunktierte Linie angedeuteten Schmelzspiegels 9 durch die Seitenwand des Ofengefäßes 2 geführt. Diesen wird Brennstoff, wie Öl oder Kohlestaub und ein sauerstoffhaltiges Gas oder Sauerstoff aus geeigneten Quellen über Verbindungsleitungen (nicht dargestellt) zugeführt. Mit diesen Düsen ist bei Sauerstoffzufuhr im Überschuß auch eine Nachverbrennung von im Ofengefäß aufsteigenden brennbaren Gasen, wie CO, möglich. Im übrigen können durch die ersten und/oder zweiten Düsen bei Bedarf auch Zuschlagstoffe zugeführt werden. Mit 13 ist der Ausguß des Ofengefäßes und mit 14 sind durch den Deckel einfahrbare Lichtbogenelektroden bezeichnet.

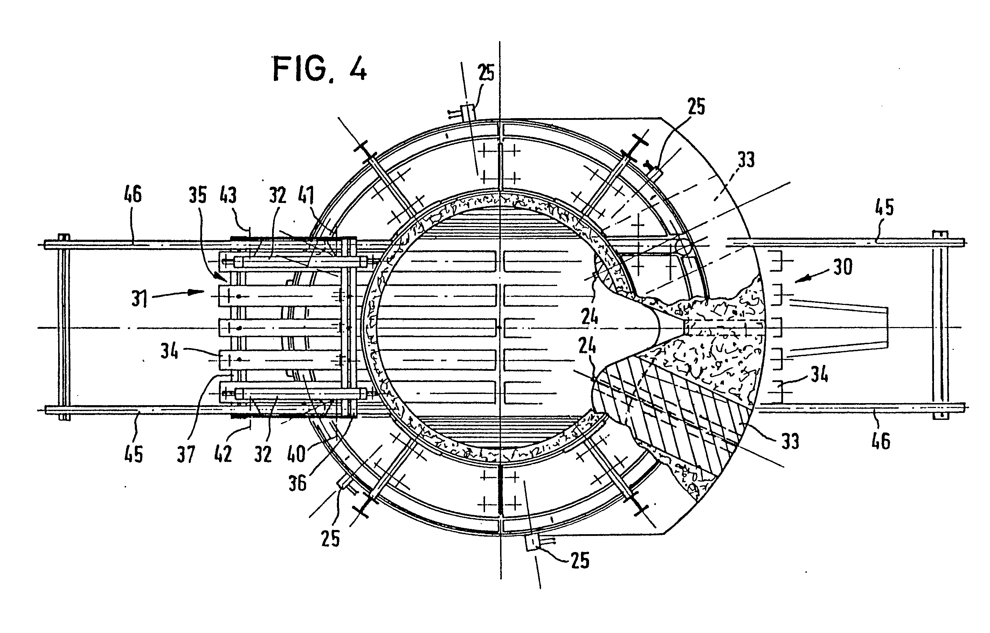

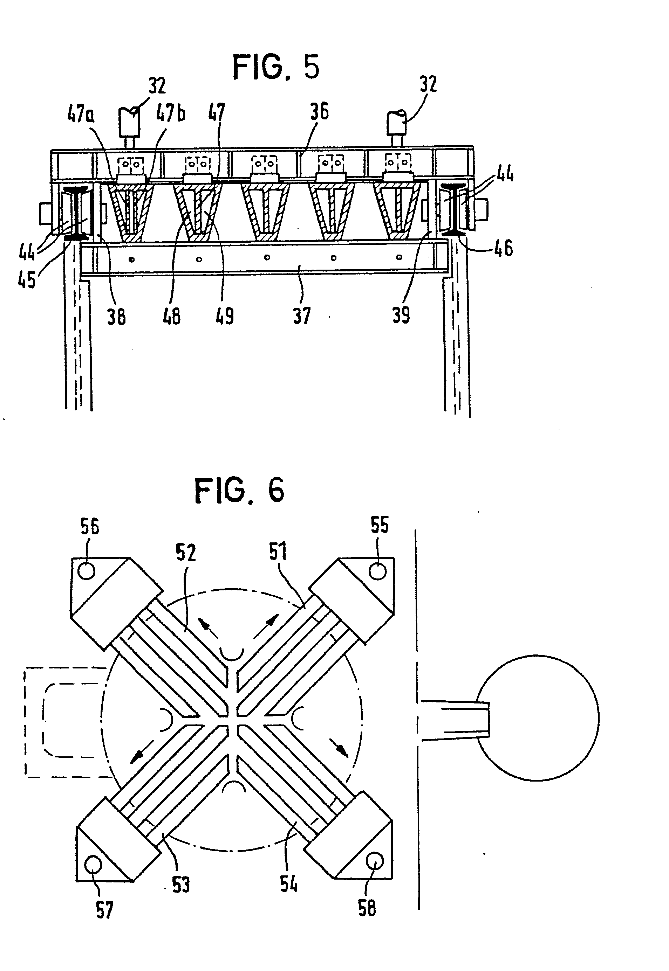

Das in den Fig. 3 und 6 dargestellte metallurgisches Schmelz- und Frischaggregat 21 enthält ein Ofengefäß 22, in das unterhalb des durch eine strichpunktierte Linie 23 angedeuteten Schmelzspiegels erste Düsen 24 münden und oberhalb des Schmelzspiegels zweite Düsen 25, die wie Fig. 4 zeigt an vier Stellen des Umfangs durch die Seitenwand des Ofengefäßes 22 geführt sind. Während der untere Teil des Ofengefäßes 22 gemauert und mit Feuerfestmaterial ausgekleidet ist, ist der obere zurückversetzte Wandabschnitt 26 aus kreisringsektorförmigen Wasserkühlkästen gebildet.

Oberhalb des Ofengefäßes 22 ist ein Vorwärmer 27 für das Einsatzmaterial des Schmelz- und Frischaggregates, im vorliegenden Fall ein Schrottvorwärmer mit einer Haube 28 angeordnet, die in einen Abgaskamin 29 mündet. Der Vorwärmer faßt eine vollständige Charge des Ofengefäßes.

Der Boden des Schrottvorwärmers 27 ist durch einen Rost aus zwei Rostteilen 30 und 31 gebildet, die in jeweils gleicher Weise aufgebaut und durch Hydraulikzylinder 32 ein- und ausfahrbar sind. Durch die Rostteile läßt sich im eingefahrenen Zustand eine Schrottcharge für das Ofengefäß im Schrottvorwärmer 27 halten und wird durch die beim Verfahrensablauf im Ofengefäß entstehenden heißen Abgase, die zwischen den einzelnen Stäben des Rostes hindurchströmen, auf die gewünschte Temperatur vorgewärmt. Durch Ausfahren der Rostteile 30 und 31 mittels der Hydraulikzylinder 32 kann dann das Ofengefäß bereits mit einem auf 800 °C bis 1 000 °C vorerwärmten Schrott chargiert werden, so daß die zum Vorwärmen einer kalten Schrottcharge erforderliche Energie entfällt. Da beim Ausfahren der Rostteile 30 und 31 zunächst in der Mitte ein Spalt gebildet wird, der sich erweitert, fällt der Schrott aus dem Vorwärmer gezielt in das Ofengefäß. Das Maß der Öffnung ist einstellbar. Durch dieses gezielte Chargieren des Schrotts in das Ofengefäß können mechanische Beschädigungen der zweiten Düsen 25 weitgehend vermieden werden. Die ersten Düsen 24 sind zu diesem Zweck und um eine entsprechend lange Lebensdauer zu gewährleisten in einer am Boden des Ofengefäßes 22 vorgesehenen Bank 33 aus Feuerfestmaterial eingebaut. Diese Bank kann nahezu bis zur Mitte des als Rundofen ausgebildeten Ofengefäßes 22 reichen. Es hat sich jedoch als vorteilhaft erwiesen, das Ofengefäß an der Stelle der Düse auszubuchten, um hier eine Bank bzw. eine geböschte Ausmauerung ausreichender Länge (gesehen in Axialrichtung der Düssen 24) vorsehen zu können. Es ist jeweils eine Düsenbank 33 zu beiden Seiten des Abstichloches 10 vorgesehen (siehe Fig. 4).

Die Haube 28 ist zwecks Chargierung auf der Ofenbühne seitlich verfahrbar oder kippbar. Der Abgaskamin ist als Venturi-Kamin ausgebildet, durch den die Abgase aus dem Ofengefäß durch den Schrottvorwärmer hindurch gesaugt werden. In dem Abgaskamin 29 kann eine Wärmetauscher vorgesehen werden, durch den die für den Prozeß im Einschmelzgefäß erforderlichen Gase, insbesondere Verbrennungsluft, vorgewärmt werden können.

Wie die in Fig. 4 und Fig. 5 dargestellten Schnittansichten von Fig. 3 zeigen, enthält jeder der Rostteile 30 bzw. 31 mehrere parallel zueinander angeordnete Roststäbe 34, die in einem Rahmen 35 gehalten sind. Der Rahmen 35 ist von der Ofenmitte aus gesehen aus einem vorderen oberen Querbalken 36, aus einem hinteren unteren Querbalken 37 und zwei seitlichen Trägern 38 und 39 aufgebaut. In den seitlichen Trägern sind an den Stellen 40 bis 43 (siehe Fig. 4) jeweils Radpaare 44 gelagert, die durch Schienen 45 bzw. 46 geführt sind. Durch die Hydraulikzylinder 32, die einerseits am ortsfesten Schrottvorwärmer 27 und andererseits am Rahmen 35 angelenkt sind, läßt sich der Rahmen längs der Schienen 45 und 46 bewegen, wobei durch die Ausbildung der Schienen in Form eines H-Profils dafür gesorgt ist, daß auch die durch das Einsatzmaterial über die Roststäbe auf den Rahmen 35 ausgeübten Kräfte durch die Schienen 45 und 46 aufgenommen werden können.

Die im Rahmen 35 befestigten Roststäbe 34 haben jeweils einen trapezförmigen, sich nach unten verjüngenden Querschnitt und weisen Kanäle für das Kühlmittel auf. Bei dem dargestellten Ausführungsbeispiel sind die Roststäbe hohl ausgebildet und innen jeweils durch einen senkrechten Steg 47 verstärkt, der in Längsrichtung der Roststäbe nicht ganz bis zur Spitze reicht, so daß zwei Kanäle 48 und 49 gebildet werden, die an der dem Ofeninneren zugewandten Spitze der Roststäbe miteinander in Verbindung stehen. Das Kühlmittel wird am anderen Ende der Roststäbe dem einen Kanal zu- und aus dem anderen Kanal abgeführt. Es können auch zwei Längsstege 47a und 47b im Hohlraum des Roststabes vorgesehen werden, wie dies bei einem Roststab in Fig. 5 angedeutet ist. In diesem Fall erfolgt die Zuleitung des Kühlmittels zweckmäßigerweise durch den zentralen Kanal und die Rückleitung durch die beiden äußeren Kanäle. Hierdurch wird sichergestellt, daß die Roststäbe auf beiden Seiten gleichmäßig und in dem thermisch am meisten beanspruchten Bereich am stärksten gekühlt werden.

Um zu verhindern, daß die aus dem Schmelgefäß aufsteigenden heißen Gase zwischen den Roststäben austreten können, sind an der Durchtrittsstelle der Rostteile 30 und 31 durch die Wandung des Schrottvorwärmers Platten mit einem Profil vorgesehen, durch das die freien Zwischenräume zwischen den einzelnen Roststäben verschlossen werden. Derartige Platten können beispielsweise auf den wassergekühlten oberen Randbereich 50 des Ofengefäßes 26 aufgesetzt werden und trapezförmige Profile mit sich nach oben verjüngendem Querschnitt aufweisen, die in die Zwischenräume zwischen die Roststäbe eingreifen.

In Fig. 6 ist ein weiteres System eines Rostes schematisch dargestellt. Hier sind vier Rostteilen 51 bis 54 jeweils um 90° gegeneinander versetzt und jeweils in axialer Richtung über Zapfen 55 bis 58 hin- und herverschiebbar.

Als Einsatzmaterialien eignen sich besonders Schrott und/oder Eisenschwamm, wobei der Vorwärmer 27, insbesondere aber die Rostteilen 30 und 31, auf das verwendete Einsatzmaterial abgestimmt werden sollten.

Obwohl bei den beschriebenen Ausführungsbeispielen die Rostteile jeweils längsverschiebbar ausgebildet sind, kann ein Öffnen und Schließen der Roste auch durch eine Kippbewegung dieser Rostteile erreicht werden. Die Rostteile brauchen auch nicht zu fluchten. Sie können zum Beispiel zur Mitte des Schmelzaggregates hin schwach nach unten geneigt sein. Außerdem ist es im Hinblick auf eine vielseitigen Einsatz des Schmelz- und Frischaggregates vorteilhaft, wenn der gesamte Vorwärmer in horizontaler Richtung bis zur Freigabe des Ofengefäßes verfahrbar oder schwenkbar ist.

**Ansprüche**

1. Metallurgisches Schmelz- und Frischaggregat (1, 21) mit einem Ofengefäß (2, 22), durch dessen Seitenwand wenigstens eine erste Düse (6, 24) geführt ist, die unterhalb des Schmelzspiegels (9, 23) mündet und in einer Bank (7, 33) aus Feuerfestmaterial am Boden des Ofengefäßes mit horizontaler oder schwach nach unten geneigter Achse angeordnet ist, durch dessen Seitenwand ferner wenigstens eine zweite Düse (8, 25) geführt ist, die oberhalb des Schmelzspiegels (9, 23) mündet, ferner im unteren Bereich des Ofengefäßes ein seitliches Abstichloch (10) für die Schmelze vorhanden ist und daß zu beiden Seiten des Abstichloches (10) und benachbart zu diesem jeweils eine Düsenbank (7, 33) vorgesehen ist, dadurch gekennzeichnet, daß das Ofengefäß (2, 22) in Form eines runden Herdofens ausgebildet ist, mit einem Verhältnis der Innenabmessungen Durchmesser (d) zu Höhe (h) des Ofengefäßes (2) zwischen 0,8 und 2,5.

2. Schmelz- und Frischaggregat nach Anspruch 1, dadurch gekennzeichnet, daß das Ofengefäß (2) mit einem ausschwenkbaren Deckel (3) versehen ist.

3. Schmelz- und Frischaggregat nach Anspruch 2, dadurch gekennzeichnet, daß durch den Deckel (3) ein- und ausfahrbare Elektroden (14) vorgesehen sind.

4. Schmelz- und Frischaggregat nach einem der Ansprüche 1 bis 3, dadurch gekennzeichnet, daß der Neigungswinkel der Achse der ersten Düse (6, 24) gegenüber der Horizontalen höchstens 20° beträgt.

5. Schmelz- und Frischaggregat nach einem der Ansprüche 1 bis 4, dadurch gekennzeichnet, daß die erste Düse (6, 24) aus wenigstens zwei konzentrischen Rohren mit einem zentralen Kanal für Sauerstoff oder sauerstoffhaltiges Gas und Ringkanälen für ein Schutzfluid gebildet ist.

6. Schmelz- und Frischaggregat nach einem der Ansprüche 1 bis 5, dadurch gekennzeichnet, daß die zweite Düse (8, 25) als Brennstoff/Sauerstoffbrenner ausgebildet ist.

7. Schmelz- und Frischaggregat nach einem der Ansprüche 1 bis 6, dadurch gekennzeichnet, daß das Verhältnis der Innenabmessungen Durchmesser (d) zu Höhe (h) des Ofengefäßes (2, 22) zwischen 1,0 und 2,0 liegt.

8. Schmelz- und Frischaggregat nach einem der Ansprüche 1 bis 7, dadurch gekennzeichnet, daß die ersten Düsen (6, 24) der beiden Düsenbänke (7) unter einem spitzen Winkel symmetrisch zum Abstichloch (10) angeordnet sind und etwa zur Mittelachse des Ofengefäßes (2, 22) weisen.

9. Schmelz- und Frischaggregat nach einem der Ansprüche 1 bis 8, dadurch gekennzeichnet, daß das Ofengefäß (22) im Bereich der Düsenbänke (33) ausgebuchtet ist und die Düsenbänke in Axialrichtung der ersten Düsen (24) nach außen versetzt sind.

10. Schmelz- und Frischaggregat nach einem der Ansprüche 1 bis 9, dadurch gekennzeichnet, daß der Boden eines oberhalb des Ofengefäßes (22) angeordneten Vorwärmers (27) für das Einsatzmaterial durch einen Rost gebildet ist, der geschlossen und geöffnet werden kann und durch den im geschlossenen Zustand die Abgase des Schmelzgefäßes in den Vorwärmer strömen können und daß der Rost mehrere im geschlossenen Zustand in der Mitte des Schmelzaggregates (21) aneinandergrenzende Rostteile (30, 31 ; 51 bis 54) enthält.

11. Schmelz- und Frischaggregat nach Anspruch 10, dadurch gekennzeichnet, daß zwei gegenüberliegende Rostteile (30, 31) vorgesehen sind, die aufeinander zu- und voneinander wegbewegbar sind.

12. Schmelz- und Frischaggregat nach Anspruch 10, dadurch gekennzeichnet, daß vier jeweils um 90° versetzte Rostteile (51 bis 54) vorgesehen sind, die jeweils in axialer Richtung hin- und herschiebbar sind.

13. Schmelz- und Frischaggregat nach einem der Ansprüche 1 bis 12, dadurch gekennzeichnet, daß der gesamte Vorwärmer (27) für das Einsatzmaterial verfahrbar oder seitlich schwenkbar angeordnet ist.

## Claims

1. A metallurgical melting and refining installation (1, 21) comprising a furnace vessel (2, 22) having a side wall through which extends at least one first nozzle (6, 24) which opens below the surface of the molten material (9, 23) and which is arranged in a bank (7, 33) of refractory material at the bottom of the furnace vessel, with a horizontal or slightly downwardly inclined axis, at least one second nozzle (8, 25) also extending through the side wall of the furnace vessel and opening above the level of molten material (9, 23), and a lateral tap hole (10) for the molten material also being provided in the lower region of the furnace vessel, a respective nozzle bank (7, 33) being provided on each side of the tap hole (10) and adjacent thereto, characterised in that the furnace vessel (2, 22) is in the form of a round hearth furnace, with a ratio in respect of internal dimensions of diameter (d) to height (h) of the furnace vessel (2) of between 0.8 and 2.5.

2. A melting and refining installation according to claim 1, characterised in that the furnace vessel (2) is provided with a cover (3) which can be swung away.

3. A melting and refining installation according to claim 2, characterised in that electrodes (14) which can be introduced and retracted through the cover (3) are provided.

4. A melting and refining installation according to one of claims 1 to 3, characterised in that the angle of inclination of the axis of the first nozzle (6, 24) relative to the horizontal is at most 20°.

5. A melting and refining installation according to one of claims 1 to 4, characterised in that the first nozzle (6, 24) is formed from at least two concentric pipes having a central passage for oxygen or oxygen-bearing gas and annular passages for a protective fluid.

6. A melting and refining installation according to one of claims 1 to 5, characterised in that the second nozzle (8, 25) is in the form of a fuel/oxygen burner.

7. A melting and refining installation according to one of claims 1 to 6, characterised in that the ratio of the internal dimensions of diameter (d) to height (h) of the furnace vessel (2, 22) is between 1.0 and 2.0.

8. A melting and refining installation according to one of claims 1 to 7, characterised in that the first nozzles (6, 24) of the two nozzle banks (7) are arranged at an acute angle symmetrically with respect to the tap hole (10) and point substantially towards the axial centre line of the furnace vessel (2, 22).

9. A melting and refining installation according to one of claims 1 to 8, characterised in that the furnace vessel (22) is bulged outwardly in the region of the nozzle banks (33) and the nozzle banks are displaced outwardly in the axial direction of the first nozzles (24).

10. A melting and refining installation according to one of claims 1 to 9, characterised in that the bottom of a preheater (27) which is arranged above the furnace vessel (22), for the furnace charge material, is formed by a grid which can be opened and closed and through which the waste gases of the melting vessel can flow into the preheater, in the closed condition of the grid, and that the grid includes a plurality of grid portions (30, 31 ; 51 to 54) which adjoin each other in the closed condition in the middle of the melting installation (21).

11. A melting and refining installation according to claim 10, characterised by two oppositely disposed grid portions (30, 31) which are movable towards and away from each other.

12. A melting and refining installation according to claim 10, characterised by four grid portions (51 to 54) which are each displaced at 90° and which are respectively capable of sliding to and fro in the axial direction.

13. A melting and refining installation according to one of claims 1 to 12, characterised in that the entire preheater (27) for the charge material is arranged to be displaceable or laterally pivotal.

## Revendications

1. Installation métallurgique de fusion et d'affinage (1, 21), comprenant une carcasse de four (2, 22) à travers la paroi latérale de laquelle passe au moins une première buse (6, 24) qui débouche en-dessous de la face libre (9, 23) de la masse fondue et qui est disposée dans un banc (7, 33) en matériau réfractaire sur le fond de la carcasse de four en ayant son axe horizontal ou légèrement incliné vers le bas, paroi latérale à travers laquelle passe en outre au moins une seconde buse (8, 25) qui débouche au-dessus de la face libre (9, 23) de la masse fondue, un trou de percée (10) latéral pour la masse fondue étant en outre prévu dans la partie inférieure de la carcasse de four et le banc (7, 33) pour des buses étant prévu des deux côtés du trou de percée (10) et à proximité de celui-ci, caractérisée en ce que la carcasse de four (2, 22) est agencée en forme de four à sole rond avec un rapport du diamètre intérieur (d) à la hauteur intérieur (h) de la carcasse de four (2) compris entre 0,8 et 2,5.

2. Installation de fusion et d'affinage suivant la revendication 1, caractérisée en ce que la carcasse de four (2) est munie d'un couvercle (3) qui peut basculer.

3. Installation de fusion et d'affinage suivant la revendication 2, caractérisée par des électrodes (14) qui peuvent être entrées et sorties à travers le couvercle (3).

4. Installation de fusion et d'affinage suivant l'une des revendications 1 à 3, caractérisée en ce que l'angle d'inclinaison de l'axe des premières buses (6, 24) par rapport à l'horizontale s'élève au plus à 20°.

5. Installation de fusion et d'affinage suivant l'une des revendications 1 à 4, caractérisée en ce que la première buse (6, 24) est constituée d'au moins deux tuyaux concentriques avec un canal central pour l'oxygène ou du gaz contenant de l'oxygène et des canaux annulaires pour un fluide de protection.

6. Installation de fusion et d'affinage suivant l'une des revendications 1 à 5, caractérisée en ce que la seconde buse (8, 25) est agencée en brûleur de combustible/oxygène.

7. Installation de fusion et d'affinage suivant l'une des revendications 1 à 6, caractérisée en ce que le rapport du diamètre intérieur (d) à la hauteur intérieure (h) de la carcasse de four (2, 22) est compris entre 1,0 et 2,0.

8. Installation de fusion et d'affinage suivant l'une des revendications 1 à 7, caractérisée en ce que les premières buses (6, 24) des deux bancs à buses (7) sont disposées en faisant un angle aigu symétriquement par rapport au trou de percée (10) et sont dirigées à peu près vers l'axe médian de la carcasse de four (2, 22).

9. Installation de fusion et d'affinage suivant l'une des revendications 1 à 8, caractérisée en ce que la carcasse de four (22) est courbée dans la région des bancs à buses (33) et les bancs à buses sont décalés vers l'extérieur dans la direction axiale des premières buses (24).

10. Installation de fusion et d'affinage suivant l'une des revendications 1 à 9, caractérisée en ce que le fond d'un réchauffeur (27) disposé au-dessus de la carcasse de four (22) pour le matériau de charge, est constitué d'une grille qui peut être fermée et ouverte et à travers laquelle, lorsqu'elle est à l'état fermé, les gaz brûlés du récipient de fusion peuvent s'écouler dans le réchauffeur, et en ce que la grille comprend plusieurs parties de grille (30, 31 ; 51 à 54) voisines l'une de l'autre à l'état fermé, au milieu de l'installation de fusion (21).

11. Installation de fusion et d'affinage suivant la revendication 10, caractérisée en ce qu'il est prévu deux parties de grille (30, 31) opposées qui peuvent être rapprochées ou éloignées l'une de l'autre.

12. Installation de fusion et d'affinage suivant la revendication 10, caractérisée en ce qu'il est prévu quatre parties de grille (51 à 54) décalées à 90° qui peuvent aller et venir dans la direction axiale.

13. Installation de fusion et d'affinage suivant l'une des revendications 1 à 12, caractérisée en ce que l'ensemble du réchauffeur (27) pour le matériau de charge est disposé de manière à pouvoir être déplacé, ou de manière à pouvoir basculer latéralement.

FIG. 1

FIG. 2

FIG. 3

FIG. 4

## FIG. 5

## FIG. 6